# EUROPEAN PATENT APPLICATION

(11) **EP 3 929 011 A1**
(43) Date of publication of application: **29.12.2021**
(21) Application number: 20760015.6
(22) Date of filing: 12.02.2020
(51) Int. Cl.: B60K 7/00, H02K 5/22, H02K 24/00, H02K 11/21

(54) **IN-WHEEL MOTOR DRIVE DEVICE**

(30) Priority: 22.02.2019 JP 2019030272
(71) Applicant: NTN Corporation, Osaka-shi, Osaka 550-0003 (JP)
(72) Inventor: SUGIURA, Saori, Iwata-shi, Shizuoka 438-8510 (JP); TAMURA, Shiro, Iwata-shi, Shizuoka 438-8510 (JP); TAIKOU, Shinya, Iwata-shi, Shizuoka 438-8510 (JP)
(74) Representative: Bockhorni & Brüntjen Partnerschaft Patentanwälte mbB
(86) International application number: PCT/JP2020/005271
(87) International publication number: WO 2020/170901

(57) **Abstract**

In an in-wheel motor drive device (1) including: a motor unit (21) having a motor rotating shaft (22) disposed offset from an axle (axis O) in a longitudinal direction of a vehicle; and a casing (10) that houses the motor unit and a speed reduction unit, the casing (10) has a first end face portion (91) overlapping the motor unit and extending in a radial direction as viewed from an inner side in a lateral direction of the vehicle, and a second end face portion (92) located on an axle side with respect to the first end face portion and extending in the radial direction as viewed from the inner side in the lateral direction of the vehicle. The second end face portion is located outward of the first end face portion in the lateral direction of the vehicle as viewed in the radial direction, and a connector member (82) that connects a signal line (76a) extending from a sensor (80) disposed in the casing and a signal line (76b) extending from a vehicle body side is provided in the second end face portion.

## Description

### Technical Field

The present invention relates to in-wheel motor drive devices, and more particularly to an attachment structure for a connector member that connects a signal line extending from a sensor disposed in a casing of an in-wheel motor drive device and a signal line extending from the vehicle body side.

### Background Art

In a vehicle equipped with an in-wheel motor drive device, a power line for supplying electric power from the vehicle body side to the in-wheel motor drive device and a signal line for sending a detection signal of a sensor disposed in a casing of the in-wheel motor drive device to the vehicle body side are disposed on a path connecting the vehicle body and a wheel.

In Japanese Unexamined Patent Publication No. 2017-185867 (Patent Literature 1), power lines and a signal line are connected to separate terminal boxes formed in a casing. Each terminal box can thus have a reduced size, and the influence of noise generated from the power lines on the signal line is minimized.

### Citation List

### Patent Literatures

Patent Literature 1: Japanese Unexamined Patent Publication No. 2017-185867

### Summary of Invention

### Technical Problem

In Patent Literature 1, the signal line terminal box overlaps a motor unit as viewed from the inner side in the lateral direction of a vehicle, and protrudes in an axle direction from a generally flat plate-like wall (hereinafter referred to as the "motor end face") that covers the motor unit from the inner side in the lateral direction of the vehicle. In Patent Literature 1, a resolver (rotational angle sensor) disposed inward of the motor unit in the lateral direction of the vehicle is housed in the signal line terminal box, and the signal line extending from the resolver extends out of the signal line terminal box in the radial direction. That is, a connector member (sleeve) for the signal line is attached to a tubular protruding wall of the signal line terminal box. Such an attachment structure reduces the protrusion dimension of the signal line terminal box from the motor end face.

In Patent Literature 1, however, since the connector member for the signal line is disposed inward of the motor end face in the lateral direction of the vehicle, the connector may be damaged by flying objects etc.

The present invention was made to solve the above problem, and it is an object of the present invention to provide an in-wheel motor drive device capable of preventing or reducing damage to a connector member for a signal line.

### Solution to Problem

An in-wheel motor drive device according to an aspect of the present invention includes a motor unit having a motor rotating shaft disposed offset from an axle in a longitudinal direction of a vehicle, a speed reduction unit that reduces a speed of rotation of the motor rotating shaft, and a casing that houses the motor unit and the speed reduction unit. The casing has a first end face portion overlapping the motor unit and extending in a radial direction as viewed from an inner side in a lateral direction of the vehicle, and a second end face portion located on an axle side with respect to the first end face portion and extending in the radial direction as viewed from the inner side in the lateral direction of the vehicle. The second end face portion is located outward of the first end face portion in the lateral direction of the vehicle as viewed in the radial direction. A connector member that connects a signal line extending from a sensor disposed in the casing and a signal line extending from a vehicle body side is provided in the second end face portion.

Preferably, the sensor includes a rotation sensor that is disposed inward of the motor unit in the lateral direction of the vehicle and that detects the rotation of the motor rotating shaft.

Preferably, the connector member extends parallel to the axle, and at least a part of the connector member overlaps the motor unit as viewed in the radial direction.

Preferably, the connector member is formed by a first connector connected to the signal line extending from the sensor and a second connector connected to the signal line extending from the vehicle body side. It is desirable that the first connector and the second connector be connected outside the casing.

Preferably, the first connector has a body extending through the second end face portion and extending in an axle direction and a flange protruding in the radial direction from the body, and the flange is fixed at positions forward and rearward of the body in the longitudinal direction of the vehicle.

It is desirable that the first connector and the second connector be connected so as to be detachable in the axle direction.

Preferably, a part of the connector member that is exposed to outside is disposed at such a position that the exposed part of the connector member overlaps a lower arm or a damper as viewed in a vertical direction of the vehicle.

The part of the connector member that is exposed to the outside may be covered by a cover member.

### Advantageous Effects of Invention

According to the present invention, damage to the connector member that connects the signal line extending from the sensor disposed in the casing and the signal line extending from the vehicle body side can be prevented or reduced.

### Brief Description of Drawings

[FIG. 1] FIG. 1 schematically illustrates an in-wheel motor drive device according to an embodiment of the present invention and its peripheral structure as viewed from the inner side in the lateral direction of a vehicle.
[FIG. 2] FIG. 2 schematically illustrates the in-wheel motor drive device according to the embodiment of the present invention and its peripheral structure as viewed from the rear of the vehicle.
[FIG. 3] FIG. 3 is a developed sectional view schematically illustrating an example of the basic configuration of the in-wheel motor drive device according to the embodiment of the present invention.
[FIG. 4] FIG. 4 is a sectional view illustrating an example of an internal structure of a speed reduction unit of the in-wheel motor drive device according to the embodiment of the present invention as viewed from the outer side in the lateral direction of the vehicle.
[FIG. 5] FIG. 5 is a front view of a rear cover (casing cover) of the in-wheel motor drive device according to the embodiment of the present invention as viewed from the inner side in the lateral direction of the vehicle, schematically illustrating the rear cover with a lid of a sensor chamber removed.
[FIG. 6] FIGS. 6(A) and 6(B) are sectional views schematically illustrating an example of the configuration of a connector member in the embodiment of the present invention.
[FIG. 7] FIG. 7 is a front view of an in-wheel motor drive device according to a modification of the embodiment of the present invention as viewed from the inner side in the lateral direction of the vehicle.
[FIG. 8] FIG. 8 is a perspective view of the in-wheel motor drive device according to the modification of the embodiment of the present invention as viewed from the inner side in the lateral direction of the vehicle and the rear of the vehicle.
[FIG. 9] FIG. 9 is an exploded perspective view schematically illustrating an attached state of a cover member in the modification of the embodiment of the present invention.
[FIG. 10] FIG. 10 is a partial sectional view taken along line X-X in FIG. 7, schematically illustrating an internal structure of the cover member.

### Description of Embodiments

An embodiment of the present invention will be described in detail with reference to the drawings. The same or corresponding portions are denoted by the same reference signs throughout the figures, and description thereof will not be repeated.

### (Basic Configuration)

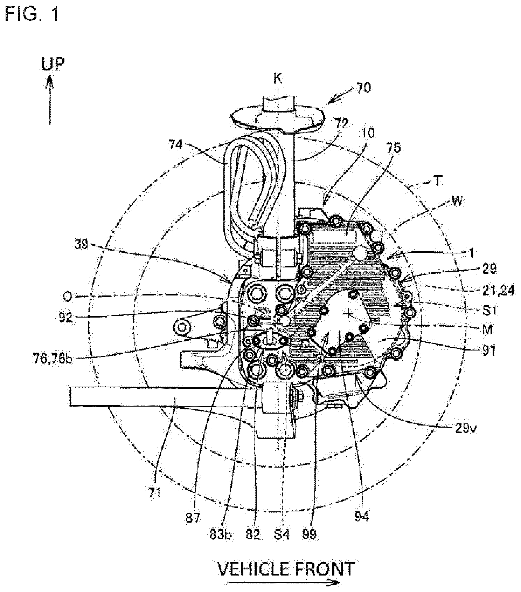

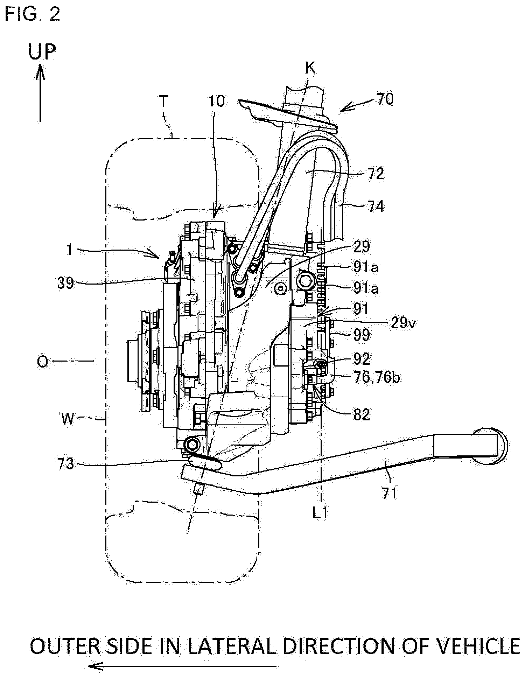

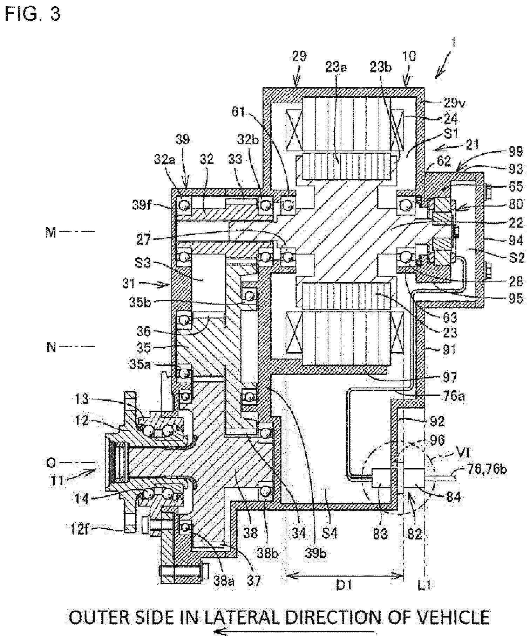

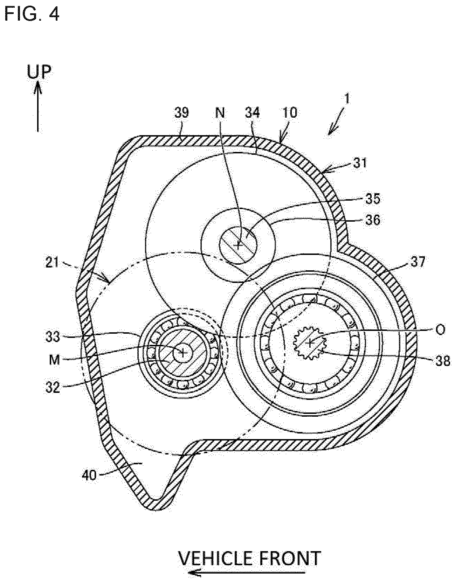

First, the basic configuration of an in-wheel motor drive device 1 according to an embodiment of the present invention and its peripheral structure will be described with reference to FIGS. 1 to 4. FIG. 1 schematically illustrates the in-wheel motor drive device 1 according to the embodiment of the present invention and its peripheral structure as viewed from the inner side in the lateral direction of a vehicle. FIG. 2 schematically illustrates the in-wheel motor drive device 1 according to the embodiment of the present invention and its peripheral structure as viewed from the rear of the vehicle. FIG. 3 is a developed sectional view schematically illustrating an example of the basic configuration of the in-wheel motor drive device 1 according to the embodiment of the present invention. FIG. 4 is a sectional view schematically illustrating an example of an internal structure of a speed reduction unit 31 of the in-wheel motor drive device 1 as viewed from the outer side in the lateral direction of the vehicle. A predetermined plane shown in FIG. 3 is a developed plane in which a plane including an axis M and an axis N shown in FIG. 4 and a plane including the axis N and an axis O shown in FIG. 4 are connected in this order. The left side of FIG. 3 represents the outer side in the lateral direction of the vehicle (outboard side), and the right side of FIG. 3 represents the inner side in the lateral direction of the vehicle (inboard side).

The in-wheel motor drive device 1 is disposed in an internal space region of a road wheel W and drives a wheel that is composed of the road wheel W and a tire T. The in-wheel motor drive device 1 is connected to a vehicle body (not shown) via a suspension system 70. The suspension system 70 is, e.g., a strut suspension system and includes a lower arm 71 extending in the lateral direction of the vehicle and a damper 72 disposed above the lower arm 71 and extending in the vertical direction.

The lower arm 71 is a suspension member disposed below the axis O of the in-wheel motor drive device 1 (centerline of an axle). The lower arm 71 is connected at its outer end in the lateral direction of the vehicle to the in-wheel motor drive device 1 via a ball joint 73. The lower arm 71 is also connected at its inner end in the lateral direction of the vehicle to a vehicle body-side member, not shown.

The damper 72 is a suspension member that can extend and contract in the vertical direction. The damper 72 is disposed inward of the road wheel W and the in-wheel motor drive device 1 in the lateral direction of the vehicle with the lower end of the damper 72 being coupled to the in-wheel motor drive device 1 and the upper end of the damper 72 being connected to the vehicle body at a position above the road wheel W.

A straight line connecting the outer end of the lower arm 71 in the lateral direction of the vehicle and the upper end of the damper 72 extends in the vertical direction and forms a steering axis K. Although the steering axis K extends basically in the vertical direction, the steering axis K may be slightly tilted in the lateral direction of the vehicle and/or the longitudinal direction of the vehicle.

The in-wheel motor drive device 1 includes a wheel hub bearing unit 11 provided in the center of the road wheel W, a motor unit 21 for driving the wheel, and the speed reduction unit 31 for reducing the speed of rotation of the motor unit 21 and transmitting the resultant rotation to the wheel hub bearing unit 11. The in-wheel motor drive device 1 includes a casing 10 that forms an outer shell of the in-wheel motor drive device 1, and the motor unit 21 and the speed reduction unit 31 are housed in the casing 10. The casing 10 is formed by a motor casing 29 and a speed reducer casing 39 that will be described later.

The motor unit 21 and the speed reduction unit 31 are disposed offset from the axis O of the wheel hub bearing unit 11. The axis O extends in the lateral direction of the vehicle and coincides with the axle. In the present embodiment, one side in the direction of the axis O is the outer side in the lateral direction of the vehicle, and the other side in the direction of the axis O is the inner side in the lateral direction of the vehicle.

Regarding the position in the direction of the axis O, the wheel hub bearing unit 11 is disposed on the one side in the axial direction of the in-wheel motor drive device 1, and the motor unit 21 is disposed on the other side in the axial direction of the in-wheel motor drive device 1. The speed reduction unit 31 is disposed on the one side in the axial direction (outer side in the lateral direction of the vehicle) with respect to the motor unit 21, and the speed reduction unit 31 overlaps the wheel hub bearing unit 11 in the axial direction.

The wheel hub bearing unit 11 is, e.g., a bearing unit with a rotating inner ring and a stationary outer ring, and has an inner ring 12 coupled to the wheel W and serving as a rotating ring (hub ring), an outer ring 13 disposed coaxially around the inner ring 12 and serving as a stationary ring, and a plurality of rolling elements 14 arranged in an annular space between the inner ring 12 and the outer ring 13. The center of rotation of the inner ring 12 coincides with the axis O passing through the center of the wheel hub bearing unit 11.

The outer ring 13 extends through a front portion 39f of the speed reducer casing 39 and is connected and fixed to the front portion 39f. The front portion 39f is a wall of the speed reducer casing 39 covering an end of the speed reduction unit 31 that is located on the one side in the direction of the axis O.

The inner ring 12 is a tubular member longer than the outer ring 13 and is passed through a central hole of the outer ring 13. The inner ring 12 has a coupling portion 12f at its end located on the one side in the direction of the axis O and protruding from the outer ring 13 to the outside (outward in the lateral direction of the vehicle). The coupling portion 12f is a flange and forms a coupling portion for coaxially coupling a brake disc and the wheel. The inner ring 12 is coupled to the wheel W via the coupling portion 12f and rotates with the wheel.

The outer peripheral surface of a middle portion of the inner ring 12 in the direction of the axis O forms an inner raceway surface for the rolling elements 14. The rolling elements 14 may be arranged in a plurality of rows. An output shaft 38 of the speed reduction unit 31 is inserted in a central hole in an end of the inner ring 12 that is located on the other side in the direction of the axis O, and is spline-fitted or serration-fitted in the central hole.

The motor unit 21 has a motor rotating shaft 22, a rotor 23, and a stator 24, and the motor rotating shaft 22, the rotor 23, and the stator 24 are disposed in this order from the axis M of the motor unit 21 to the outer side in the radial direction of the motor unit 21. The motor unit 21 is housed in the motor casing 29. The axis M that is the center of rotation of the motor rotating shaft 22 and the rotor 23 is located forward of the central axis of the wheel, namely the axis O of the wheel hub bearing unit 11, in the longitudinal direction of the vehicle.

A tubular portion of the motor casing 29 surrounds the stator 24. An end of the tubular portion of the motor casing 29 that is located on one side in the direction of the axis M is coupled to a back portion 39b of the speed reducer casing 39. The back portion 39b is a wall of the speed reducer casing 39 covering an end of the speed reduction unit 31 that is located on the other side in the direction of the axis M (direction of the axis O). The back portion 39b functions as a partition wall separating the internal space (speed reduction chamber S3) of the speed reduction unit 31 and the internal space (motor chamber S1) of the motor unit 21.

An end of the tubular portion of the motor casing 29 that is located on the other side in the direction of the axis M is sealed by a rear cover 29v. The rear cover 29v is a wall forming an inner end face of the casing 10 in the lateral direction of the vehicle. The motor chamber S1 is thus formed between the back portion 39b of the speed reducer casing 39 and the rear cover 29v.

Both ends of the motor rotating shaft 22 are rotatably supported by the back portion 39b of the speed reducer casing 39 and the rear cover 29v via rolling bearings 27, 28. The rolling bearing 27 is fitted in a bearing fitting portion 61 formed in the back portion 39b of the speed reducer casing 39. The rolling bearing 28 is fitted in a bearing fitting portion 63 formed in the rear cover 29v. The rotor 23, the stator 24, and a middle portion of the motor rotating shaft 22 in the axial direction (a part located between the pair of rolling bearings 27, 28) are disposed in the motor chamber S1.

A resolver 80 is provided on an end of the motor rotating shaft 22 that is located on the other side in the direction of the axis M. The resolver 80 is a rotation sensor for detecting rotation of the motor rotating shaft 22 (rotor 23). The resolver 80 is fitted in a tubular portion 62 formed in the rear cover 29v so that the resolver 80 is located adjacent to the rolling bearing 28. That is, the tubular portion 62 includes the bearing fitting portion 63 in which the rolling bearing 28 is fitted and a sensor fitting portion 65 in which the resolver 80 is fitted.

The resolver 80 is housed in a sensor box 99 protruding inward in the lateral direction of the vehicle from a motor end face portion (first end face portion 91 that will be described below) of the rear cover 29v. Specifically, the sensor box 99 is formed by a tubular protruding wall 93 protruding from the motor end face and a lid 94 covering an opening of the protruding wall 93. The lid 94 is bolted to an end face of the protruding wall 93. The lid 94 is disposed away from the sensor fitting portion 65, and a space S2 is provided between the lid 94 and the sensor fitting portion 65.

The speed reduction unit 31 includes, as a speed reduction mechanism for reducing the speed of rotation of the motor rotating shaft 22, e.g., a three-axis parallel shaft gear reducer having the axes O, M, and N extending parallel to each other. Specifically, the speed reduction unit 31 has an input shaft 32 coaxially coupled to the motor rotating shaft 22, an input gear 33 coaxially provided on the outer peripheral surface of the input shaft 32, a plurality of intermediate gears 34, 36, an intermediate shaft 35 coupled to the centers of the intermediate gears 34, 36, the output shaft 38 coaxially coupled to the inner ring 12 of the wheel hub bearing unit 11, and an output gear 37 coaxially provided on the outer peripheral surface of the output shaft 38. The speed reduction unit 31 is housed in the speed reducer casing 39.

The input shaft 32 is rotatably supported on both end sides of the input gear 33 by the front portion 39f and the back portion 39b of the speed reducer casing 39 via rolling bearings 32a, 32b. The axis N that is the center of rotation of the intermediate shaft 35 extends parallel to the axis O. Both ends of the intermediate shaft 35 are rotatably supported by the front portion 39f and the back portion 39b of the speed reducer casing 39 via bearings 35a, 35b. The first intermediate gear 34 and the second intermediate gear 36 are provided on a middle portion of the intermediate shaft 35 coaxially with the axis N of the intermediate shaft 35. The diameter of the first intermediate gear 34 is larger than that of the second intermediate gear 36. The first intermediate gear 34 with a large diameter is located on the other side in the direction of the axis N with respect to the second intermediate gear 36 and meshes with the input gear 33 with a small diameter. The second intermediate gear 36 with a small diameter is located on one side in the direction of the axis N with respect to the first intermediate gear 34 and meshes with the output gear 37 with a large diameter.

As shown in FIG. 4, the axis N of the intermediate shaft 35 is located above the axis O and the axis M. The axis N of the intermediate shaft 35 is located forward of the axis O in the longitudinal direction of the vehicle and rearward of the axis M in the longitudinal direction of the vehicle.

The output gear 37 is provided coaxially on a middle portion of the output shaft 38. The output shaft 38 extends along the axis O. An end of the output shaft 38 that is located on the one side in the direction of the axis O is inserted in the central hole of the inner ring 12, and is fitted in the central hole of the inner ring 12 such that the output shaft 38 is not rotatable relative to the inner ring 12. This fitting is spline fitting or serration fitting. The middle portion (one end side) of the output shaft 38 in the direction of the axis O is rotatably supported by the front portion 39f of the speed reducer casing 39 via a rolling bearing 38a. An end (other end side) of the output shaft 38 that is located on the other side in the direction of the axis O is rotatably supported by the back portion 39b of the speed reducer casing 39 via a rolling bearing 38b.

The speed reduction unit 31 reduces the speed of rotation of the input shaft 32 and transmits the resultant rotation to the output shaft 38 by meshing between a drive gear with a small diameter a driven gear with a large diameter, namely meshing between the input gear 33 and the first intermediate gear 34 and meshing between the second intermediate gear 36 and the output gear 37. Rotating elements from the input shaft 32 to the output shaft 38 of the speed reduction unit 31 form a drive transmission path along which rotation of the motor unit 21 is transmitted to the inner ring 12. The input shaft 32, the intermediate shaft 35, and the output shaft 38 are supported at their both ends by the rolling bearings described above. These rolling bearings 32a, 35a, 38a, 32b, 35b, and 38b are radial bearings.

The speed reducer casing 39 includes a tubular portion, and the front portion 39f and the back portion 39b that are in the shape of a flat plate and that cover both ends of the tubular portion. The tubular portion covers parts located inside the speed reduction unit 31 such that the tubular portion surrounds the axes O, N, and M extending parallel to each other. The front portion 39f covers the parts located inside the speed reduction unit 31 from the one side in the axial direction, and the back portion 39b covers the parts located inside the speed reduction unit 31 from the other side in the axial direction.

When electric power is supplied from the outside of the in-wheel motor drive device 1 to the stator 24 of the motor unit 21 via a power line 74, the rotor 23 of the motor unit 21 rotates and outputs the rotation from the motor rotating shaft 22 to the speed reduction unit 31. The speed reduction unit 31 reduces the speed of the rotation input from the motor unit 21 to the input shaft 32 and outputs the resultant rotation from the output shaft 38 to the wheel hub bearing unit 11. The inner ring 12 of the wheel hub bearing unit 11 rotates at the same rotational speed as that of the output shaft 38 and drives the wheel attached and fixed to the inner ring 12.

As shown in FIGS. 1 and 2, the power line 74 and a signal line 76 are disposed between the in-wheel motor drive device 1 and the vehicle body (not shown).

The power line 74 extends in the radial direction toward the rear of the vehicle (toward the axle) out of a terminal box 75 provided in an upper part of the motor casing 29 (at a position above the motor unit 21). The signal line 76 extends out of a portion different from the terminal box 75. The signal line 76 extends inward in the lateral direction of the vehicle directly through the rear cover 29v without via the terminal box 75.

Specifically, a connector member 82 connecting a signal line 76a extending from the resolver 80 and a signal line 76b extending from the vehicle body side is attached to the rear cover 29v. With this configuration, the size of the terminal box 75 is reduced, and the influence of noise generated from the power line 74 on the signal line 76 is minimized.

### (Attachment Structure for Connector Member)

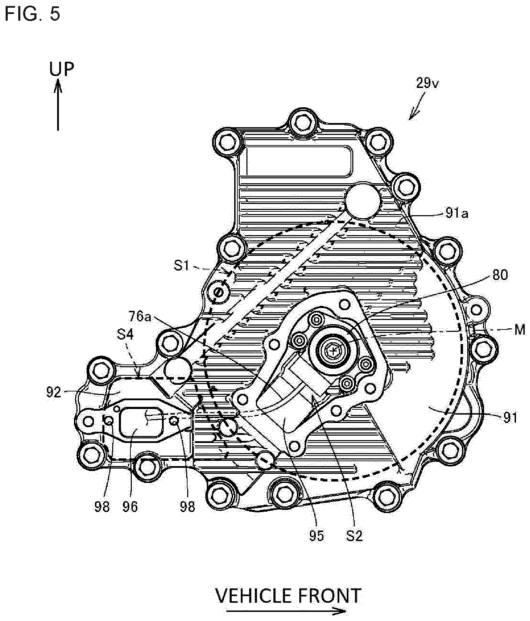

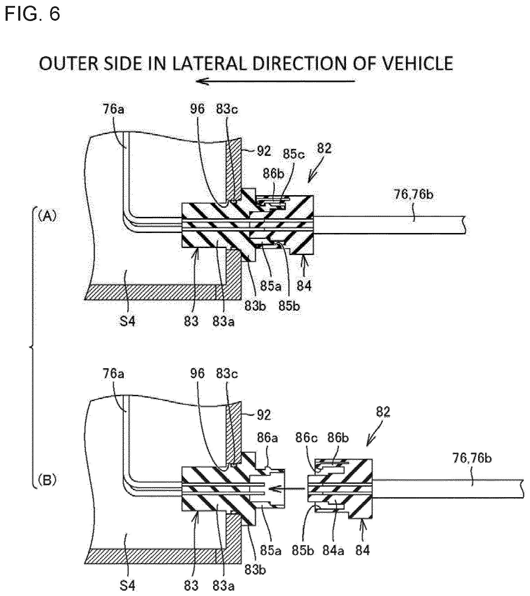

An attachment structure for the connector member 82 will be described in detail with reference also to FIGS. 5 and 6. FIG. 5 is a front view of the rear cover 29v as viewed from the inner side in the lateral direction of the vehicle, schematically illustrating the rear cover 29v with the lid 94 of the sensor box 99 removed. FIG. 6 show sectional views schematically illustrating an example of the configuration of the connector member 82, and are enlarged sectional views of a portion VI in FIG. 3. In the specification, the direction parallel to the axle, namely the direction along the axes N, M, and O, is referred to as the axial direction or the axle direction as necessary.

As described above, the axis M of the motor rotating shaft 22 is located forward of the axis O of the wheel hub bearing unit 11 in the longitudinal direction of the vehicle, and the motor rotating shaft 22 is offset from the axle toward the front of the vehicle. As shown in FIG. 1, in the present embodiment, the entire motor unit 21 is disposed forward of the axis O of the output shaft 38 in the longitudinal direction of the vehicle.

Referring to FIGS. 1 and 3, in the present embodiment, a wire housing chamber S4 located radially outward of and rearward of the motor unit 21 in the longitudinal direction of the vehicle is provided in the motor casing 29, and the rear cover 29v is connected to the tubular portion of the motor casing 29 so as to cover both the motor chamber S1 and the wire housing chamber S4 from the inner side in the lateral direction of the vehicle. Both the motor chamber S1 and the wire housing chamber S4 are formed between the back portion 39b of the speed reducer casing 39 and the rear cover 29v.

That is, the rear cover 29v has the first end face portion 91 overlapping the motor unit 21 and extending in the radial direction as viewed from the inner side in the lateral direction of the vehicle, and a second end face portion 92 located rearward of (on the axle side with respect to) the first end face portion 91 in the longitudinal direction of the vehicle and extending in the radial direction as viewed from the inner side in the lateral direction of the vehicle. The first end face portion 91 forms the motor end face portion described above, and the sensor box 99 protrudes from the first end face portion 91. The bearing fitting portion 63 described above protrudes outward in the lateral direction of the vehicle from the first end face portion 91, and the sensor fitting portion 65 protrudes inward in the lateral direction of the vehicle from the first end face portion 91.

The second end face portion 92 is located radially outward of the outer peripheral surface of the motor unit 21 (the outer peripheral surface of the stator 24) and covers at least a part of the wire housing chamber S4. As shown in FIG. 1, the second end face portion 92 overlaps the steering axis K as viewed from the inner side in the lateral direction of the vehicle. As shown in FIG. 3, in the motor casing 29, the motor chamber S1 and the wire housing chamber S4 are separated in the radial direction by an arc-shaped boundary wall 97 that contacts the outer peripheral surface of the stator 24. The boundary wall 97 is disposed away from the rear cover 29v.

As shown in FIGS. 2 and 3, a step is provided between the first end face portion 91 and the second end face portion 92, so that the second end face portion 92 is located outward of the first end face portion 91 in the lateral direction of the vehicle as viewed in the radial direction. That is, the second end face portion 92 is recessed with respect to the first end face portion 91. Specifically, the first end face portion 91 is located out of an axial range D1 of the stator 24 of the motor unit 21, whereas the second end face portion 92 is located within the range D1. A plurality of heat dissipation fins 91a may be provided on a surface (inner end face in the lateral direction of the vehicle) of the first end face portion 91. No heat dissipation fin 91a is provided on the second end face portion 92.

The connector member 82 for the signal line 76 is provided in the second end face portion 92 of the rear cover 29v. Specifically, the connector member 82 is provided so as to extend parallel to the axle and to extend through the second end face portion 92 in the axial direction. Accordingly, at least a part of the connector member 82 is disposed within the axial range D1 of the stator 24 of the motor unit 21. That is, at least a part of the connector member 82 overlaps the motor unit 21 as viewed in the radial direction (as viewed in a direction perpendicular to the axle).

As described above, in the present embodiment, the signal line 76 extends in the axial direction through the second end face portion 92 recessed with respect to the first end face portion 91. Accordingly, even though the connector member 82 is provided in the axial direction, the connector member 82 can be prevented or restrained from protruding beyond an axial position (hereinafter referred to as "motor end face position") L1 of the surface of the first end face portion 91. Since the protrusion dimension of the sensor box 99 can be reduced as compared to the configuration in which the connector member is provided in the protruding wall 93 of the sensor box 99, the axial dimension of the in-wheel motor drive device 1 can be reduced.

The entire connector member 82 is desirably disposed outward of the motor end face position L1 in the lateral direction of the vehicle. In the case where the connector member 82 is thus disposed so as not to protrude beyond the motor end face position L1, damage to the connector member 82 by flying objects etc. can be effectively prevented or reduced.

As shown in FIGS. 1 and 2, the connector member 82 is disposed at such a position that the connector member 82 overlaps the lower arm 71 or the damper 72 outside the casing 10 as viewed in the vertical direction of the vehicle. In the present embodiment, a part of the connector member 82 that is exposed to the outside (an entire second connector 84 and a flange 83b of a first connector 83) is disposed at such a position that the exposed part of the connector member 82 overlaps both the lower arm 71 and the damper 72 as viewed in the vertical direction of the vehicle.

In the case where the connector member 82 overlaps the lower arm 71 in the axial direction and the longitudinal direction of the vehicle, the connector member 82 is less susceptible to flying objects from below the vehicle. In the case where the connector member 82 overlaps the damper 72 in the axial direction and the longitudinal direction of the vehicle, the connector member 82 is less susceptible to flying objects from above the vehicle. Damage to the connector member 82 can thus be more effectively prevented.

The connector member 82 is located near the steering axis K as viewed from the inner side in the lateral direction of the vehicle, and is provided at, e.g., a position slightly below the axis O. The connector member 82 and the signal line 76 (76b) can thus be prevented from moving around during steering. As shown in FIGS. 1 and 2, the signal line 76b extending inward in the lateral direction of the vehicle through the connector member 82 is bent upward along a surface (inner end face in the lateral direction of the vehicle) of the second end face portion 92 of the rear cover 29v.

As described above, according to the present embodiment, since the connector member 82 is provided in the second end face portion 92, damage to the connector member 82 by flying objects can be prevented or reduced. Falling off of the connector member 82 and disconnection of the signal line 76 can thus be prevented. As a result, leakage of lubricating oil sealed in the casing 10 and entry of foreign matter into the casing 10 can be prevented, and failure of the in-wheel motor drive device 1 can therefore be prevented.

It is desirable that the connector member 82 be attached in such a manner that, even if the connector member 82 is damaged, the damaged portion can be easily repaired or replaced. That is, it is desirable that the connector member 82 be fixed to the second end face portion 92 from the outside. In the present embodiment, the connector member 82 is fixed to the surface of the second end face portion 92 by bolts (fastening members) 87.

It is desirable that the connector member 82 be formed by the first connector 83 connected to the signal line 76a extending from the resolver 80 and the second connector 84 connected to the signal line 76b extending from the vehicle body side, as shown in FIGS. 3 and 6. FIG. 6(A) illustrates the first connector 83 and the second connector 84 connected together, and FIG. 6(B) illustrates the second connector 84 disconnected from the first connector 83.

The signal line 76a extending from the resolver 80 is disposed so as to extend from the space S2 inside the sensor box 99 into the wire housing chamber S4 through the motor chamber S1. Specifically, as shown in FIGS. 5 and 6, the signal line 76a extends from the space S2 inside the sensor box 99 into the motor chamber S1 through an opening 95 formed in the first end face portion 91 and then extends from the motor chamber S1 into the wire housing chamber S4 through clearance between the boundary wall 97 and the first end face portion 91.

In this case, the first connector 83 is inserted through the second end face portion 92, and the first connector 83 and the second connector 84 are connected outside the casing 10. That is, the first connector 83 has a body 83a that is fitted in an insertion hole 96 formed in the second end face portion 92, and the flange 83b that protrudes radially outward from the outer peripheral surface of the body 83a and that is fixed to the second end face portion 92. A part (inner end in the lateral direction of the vehicle) of the second connector 84 may protrude inward in the lateral direction of the vehicle beyond the motor end face position L1 of the rear cover 29v.

Referring to FIG. 5, the rear cover 29v has threaded holes 98 in the surface of the second end face portion 92. Shafts of the bolts 87 are passed through through holes (not shown) formed in the flange 83b and screwed into the threaded holes 98, whereby the first connector 83 is fixed to the second end face portion 92 from the outside. An annular seal member 83c is provided on a fitted part of the outer peripheral surface of the body 83a that is fitted in the second end face portion 92 (a fitted part fitted with the inner peripheral surface of the insertion hole 96). The wire housing chamber S4 is thus sealed from the outside space.

The first connector 83 is bolted to the second end face portion 92 at least at two points. This reduces loosening of the bolts 87 due to vibration. The flange 83b of the first connector 83 is desirably fixed to the second end face portion 92 at positions forward and rearward of the body 83a in the longitudinal direction of the vehicle. In this case, as shown in FIG. 5, the threaded holes 98 are formed in the second end face portion 92 at positions forward and rearward of the insertion hole 96 in the longitudinal direction of the vehicle. The flange 83b has the through holes at positions forward and rearward of the body 83a in the longitudinal direction of the vehicle, and the two bolts 87 are passed through the through holes of the flange 83b and screwed into the threaded holes 98 of the second end face portion 92.

In the case where the connector member 82 is thus supported by the casing 10 at two points in the longitudinal direction of the vehicle, the connector member 82 (first connector 83) can be effectively prevented from falling off from the casing 10 (second end face portion 92) even if a flying object hits the connector member 82 from the front or rear in the longitudinal direction of the vehicle.

It is desirable that the first connector 83 and the second connector 84 be connected so as to be detachable in the axle direction. Since the second connector 84 is disposed such that the entire second connector 84 protrudes from the second end face portion 92 in the axle direction, the second connector 84 is more susceptible to flying objects than the first connector 83 is. With the second connector 84 being detachably connected to the first connector 83, the second connector 84 can be easily replaced even if the second connector 84 is damaged.

The first connector 83 and the second connector 84 have bodies 83a, 84a, respectively, each having a lead wire inside. With the bodies 83a, 84a being in close contact with each other in the axial direction, the internal signal line 76a and the external signal line 76b are electrically connected to each other.

The connector member 82 includes lock means for keeping the bodies 83a, 84b in contact with each other. One example of the lock means is shown in FIG. 6. The first connector 83 has a tubular portion 85a having a cylindrical or rectangular tubular shape, protruding inward in the lateral direction of the vehicle with respect to the body 83a and the flange 83b, and extending in the axial direction. The second connector 84 has an annular or frame-shaped groove 85b which is located around the body 84a and in which the tubular portion 85a is fitted. The groove 85b opens outward in the axial direction.

In the present embodiment, a protrusion 86a serving as a stopped portion is provided on the outer peripheral surface of the tubular portion 85a, and an elastic member 86b having at its tip end (outer end in the lateral direction of the vehicle) a claw 86c serving as a stopping portion is provided in the groove 85b. The tubular portion 85a is fitted in the groove 85b with the claw 86c being elastically caught by the protrusion 86a, whereby the bodies 83a, 84a are kept in contact with each other (locked). In this case, the tubular portion 85a is loosely fitted in the groove 85b. That is, as shown in FIG. 6(A), when the first connector 83 and the second connector 84 are in the connected state, there is clearance 85c between the outer peripheral surface of the tubular portion 85a and a root portion of the elastic member 86b.

In the case where the connector member 82 has such lock means, the claw 86c is released from the protrusion 86a when the root portion of the elastic member 86b is squeezed by hand from the outside of the second connector 84. The bodies 83a, 84a can thus be easily disengaged from each other (unlocked). Accordingly, the second connector 84 can be easily attached and detached from the first connector 83 in the axial direction. The second connector 84 can therefore be easily replaced if the second connector 84 is damaged.

### (Modification)

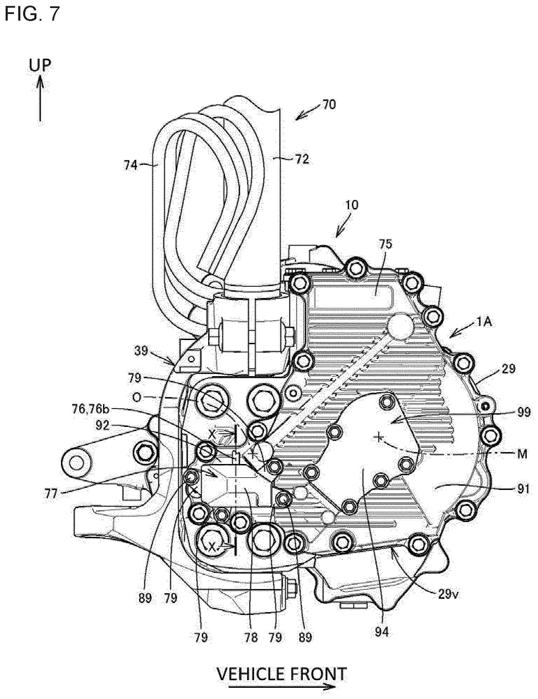

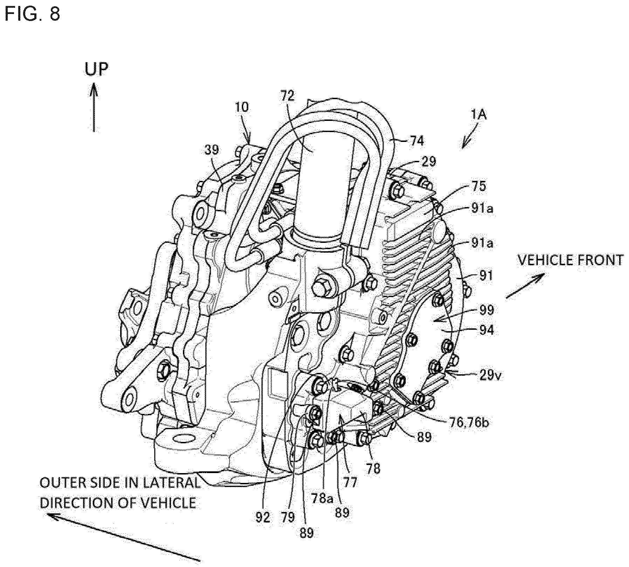

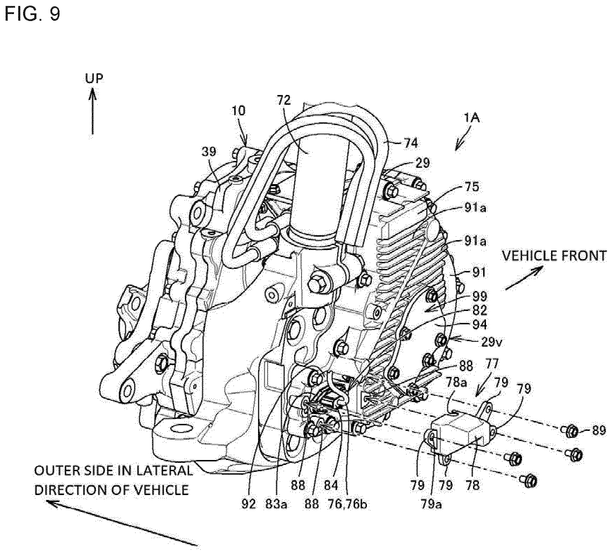

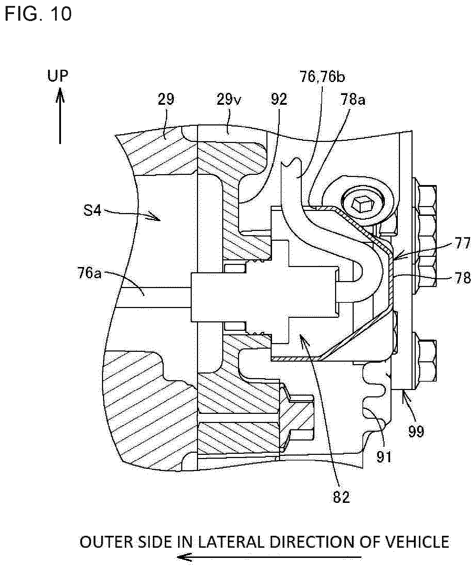

As shown in FIGS. 7 to 10, the part of the connector member 82 that is exposed to the outside, namely the entire second connector 84 and the flange 83b of the first connector 83, may be covered by a cover member 77. An in-wheel motor drive device 1A according to a modification of the embodiment further includes the cover member 77 that covers the connector member 82. FIG. 7 is a front view of the in-wheel motor drive device 1A as viewed from the inner side in the lateral direction of the vehicle. FIG. 8 is a perspective view of the in-wheel motor drive device 1A as viewed from the inner side in the lateral direction of the vehicle and the rear of the vehicle. FIG. 9 is an exploded perspective view schematically illustrating an attached state of the cover member 77. FIG. 10 is a partial sectional view taken along line X-X in FIG. 7, schematically illustrating an internal structure of the cover member 77.

The cover member 77 is formed in the shape of a cap curved inward in the lateral direction of the vehicle, and houses the entire exposed part of the connector member 82. The cover member 77 is fixed to an inner end face (surface) of the rear cover 29v in the lateral direction of the vehicle. Specifically, the cover member 77 has a cap portion 78 that covers the entire exposed part of the connector member 82, and a plurality of tongues 79 that protrudes radially outward from the cap portion 78 and that is fixed to the rear cover 29v by bolts (fastening members) 89.

As shown in FIG. 9, each tongue 79 has a through hole 79a extending through the tongue 79 in the thickness direction, and the rear cover 29v has threaded holes 88 at corresponding positions in its inner end face in the lateral direction of the vehicle. Shafts of the bolts 89 are passed through the through holes 79a of the tongues 79 and screwed into the threaded holes 88 of the rear cover 29v, whereby the cover member 77 is fixed to the inner end face of the rear cover 29v in the lateral direction of the vehicle.

As shown in the figures, the threaded holes 88 of the rear cover 29v may be formed in both the second end face portion 92 and the first end face portion 91. The cover member 77 can thus be appropriately fixed to the rear cover 29v even in the case where the flange 83b of the connector member 82 extends to a position close to the boundary between the first end face portion 91 and the second end face portion 92.

A cutout 78a for passing the signal line 76b therethrough to the outside is formed in a part of an end (upper end) of the cap portion 78 that is located on the upper side in the vertical direction of the vehicle, at such a position that the cutout 78a faces the second end face portion 92 of the rear cover 29v. In this case, the signal line 76b extending inward in the lateral direction of the vehicle through the connector member 82 is bent upward and outward in the lateral direction of the vehicle within the cap portion 78, and extends upward along the second end face portion 92 through the cutout 78a.

Since the cap portion 78 has the cutout 78a, the signal line 76a can be caused to extend in a desired direction, and the signal line 76b can therefore be effectively prevented from moving around during steering. Instead of the cutout 78a, the cap portion 78 may have a through hole (not shown) for passing the signal line 76b therethrough to the outside.

According to the modification, since the connector member 82 can be protected by the cover member 77, damage to the connector member 82 can be more reliably prevented.

### (Other Modifications)

Regarding the attachment structure for the connector member 82 according to the embodiment (and the modification), an example is described in which the connector member 82 connects the signal line 76a extending from the resolver 80 and the signal line 76b extending from the vehicle body side. However, the example is not restrictive. That is, the attachment structure for the connector member 82 described above is also applicable to the case where the connector member 82 connects a signal line extending from other sensor disposed in the casing 10 such as, e.g., an oil temperature sensor (not shown) provided in an oil tank 40 in the lower part of the speed reduction chamber S3 and a signal line extending from the vehicle body side. The first connector 83 of the connector member 82 may be connected to a plurality of signal lines extending from a plurality of sensors.

An example is described above in which the motor rotating shaft 22 is disposed offset from the axle (axis O) toward the front of the vehicle. However, the motor rotating shaft 22 may be disposed offset from the axle toward the rear of the vehicle. In this case, the second end face portion 92 of the rear cover 29v is disposed relatively forward of the first end face portion 91 in the longitudinal direction of the vehicle.

In the embodiment, an example is described in which the speed reduction unit 31 of the in-wheel motor drive device 1 is a three-axis parallel shaft gear reducer. However, the speed reduction unit may be other type of gear reducer such as a four-axis parallel shaft gear reducer or may be a speed reducer with no gear.

The embodiment disclosed herein should be construed as illustrative, not restrictive, in all respects. The scope of the present invention is defined by the claims rather than by the above description, and is intended to include all modifications within the meaning and scope equivalent to the claims.

### Reference Signs List

1, 1A: In-Wheel Motor Drive Device, 10: Casing, 11: Wheel Hub Bearing Unit, 21: Motor Unit, 22: Motor Rotating Shaft, 31: Speed Reduction Unit, 39: Speed Reducer Casing, 71: Lower Arm, 72: Damper, 76, 76a, 76b: Signal Line, 77: Cover Member, 80: Resolver (Rotation Sensor), 82: Connector Member, 83: First Connector, 84: Second Connector, 91: First End Face Portion, and 92: Second End Face Portion.

## Claims

1. An in-wheel motor drive device including a motor unit having a motor rotating shaft disposed offset from an axle in a longitudinal direction of a vehicle, a speed reduction unit that reduces a speed of rotation of the motor rotating shaft, and a casing that houses the motor unit and the speed reduction unit, wherein
the casing has a first end face portion overlapping the motor unit and extending in a radial direction as viewed from an inner side in a lateral direction of the vehicle, and a second end face portion located on an axle side with respect to the first end face portion and extending in the radial direction as viewed from the inner side in the lateral direction of the vehicle,
the second end face portion is located outward of the first end face portion in the lateral direction of the vehicle as viewed in the radial direction, and
a connector member that connects a signal line extending from a sensor disposed in the casing and a signal line extending from a vehicle body side is provided in the second end face portion.

2. The in-wheel motor drive device according to claim 1, wherein
the sensor includes a rotation sensor that is disposed inward of the motor unit in the lateral direction of the vehicle and that detects the rotation of the motor rotating shaft.

3. The in-wheel motor drive device according to claim 1 or 2, wherein
the connector member extends parallel to the axle, and
at least a part of the connector member overlaps the motor unit as viewed in the radial direction.

4. The in-wheel motor drive device according to any one of claims 1 to 3, wherein
the connector member is formed by a first connector connected to the signal line extending from the sensor and a second connector connected to the signal line extending from the vehicle body side, and
the first connector and the second connector are connected outside the casing.

5. The in-wheel motor drive device according to claim 4, wherein
the first connector has a body extending through the second end face portion and extending in an axle direction and a flange protruding in the radial direction from the body, and
the flange is fixed at positions forward and rearward of the body in the longitudinal direction of the vehicle.

6. The in-wheel motor drive device according to claim 4 or 5, wherein
the first connector and the second connector are connected so as to be detachable in the axle direction.

7. The in-wheel motor drive device according to any one of claims 1 to 6, wherein
a part of the connector member that is exposed to outside is disposed at such a position that the exposed part of the connector member overlaps a lower arm or a damper as viewed in a vertical direction of the vehicle.

8. The in-wheel motor drive device according to any one of claims 1 to 7, wherein
the part of the connector member that is exposed to the outside is covered by a cover member.
